# FASCICULE DE BREVET EUROPEEN

(11) **EP 2 232 053 B1**
(45) Date de publication et mention de la délivrance du brevet: **26.02.2014**
(21) Numéro de dépôt: 08867856.0
(22) Date de dépôt: 24.12.2008
(51) Int. Cl.: F03B 11/00, F03B 11/06, F03B 3/02, F03B 13/00

(54) **MACHINE HYDRAULIQUE, INSTALLATION DE CONVERSION D'ENERGIE COMPRENANT UNE TELLE MACHINE ET UTILISATION D'UN PALIER-LABYRINTHE DANS UNE TELLE MACHINE**
HYDRAULISCHE MASCHINE, ENERGIEUMWANDLUNGSANLAGE MIT EINER DERARTIGEN MASCHINE UND VERWENDUNG EINES HYDROSTATISCHEN LAGERS BEI EINER DERARTIGEN MASCHINE
HYDRAULIC MACHINE, ENERGY CONVERSION PLANT COMPRISING SUCH A MACHINE, AND USE OF A HYDROSTATIC BEARING IN SUCH A MACHINE

(30) Priorité: 28.12.2007 FR 0760415
(43) Date de publication de la demande: 29.09.2010
(73) Titulaire: ALSTOM Renewable Technologies, 38100 Grenoble (FR)
(72) Inventeur: BOUVET, Yves, F-38660 La Terrasse (FR); BERTEA, Jean François, F-07300 Saint Jean de Muzols (FR)
(74) Mandataire: Pesce, Michele
(86) Numéro de dépôt international: PCT/FR2008/052417
(87) Numéro de publication internationale: WO 2009/083695

(56) Documents cités:
- AU-B2- 411 295
- FR-A- 1 399 028
- FR-A- 2 099 384
- GB-A- 1 003 044
- GB-A- 1 117 745
- US-A1- 2004 094 901

## Description

La présente invention a trait à une machine hydraulique qui comprend une roue mobile en rotation, par rapport à une structure fixe et autour d'un axe de rotation fixe, et qui est destinée à être traversée par un écoulement forcé d'eau. Un tel écoulement est à une pression relativement élevée, qui dépend notamment de la géométrie de la machine et de la configuration générale de l'installation à laquelle appartient cette machine, notamment de la hauteur de chute lorsque la machine est une turbine. La pression de cet écoulement est généralement comprise entre 3 et 80 bars. L'écoulement forcé dans la roue de la machine a pour effet d'entraîner cette roue en rotation, lorsque la machine est une turbine. Cet écoulement résulte de cette rotation, lorsque la machine est une pompe. L'invention est applicable aux machines hydrauliques de type turbine, pompe ou turbine-pompe.

Dans les machines hydrauliques, par exemple les turbines à eau de type Francis, il est connu de disposer un labyrinthe entre, d'une part, une partie de la turbine soumise à une pression d'eau similaire à celle de l'écoulement et, d'autre part, une chambre dite basse pression à partir de laquelle l'eau qui traverse le labyrinthe peut être évacuée vers l'aval de l'installation. Le débit d'eau qui traverse le labyrinthe constitue une fuite, qui peut ne pas être négligeable, par rapport à la quantité d'eau amenée vers la roue de turbine. Cette fuite n'est pas motrice, c'est-à-dire n'est pas utilisée pour mettre en rotation la roue de turbine autour de son axe. Une turbine Francis comprend en général, par ailleurs, un palier destiné à assurer le centrage d'un arbre supportant la roue par rapport à son axe de rotation. Le plus souvent, il est, en outre, prévu un joint d'arbre destiné à éviter l'écoulement d'eau en direction d'un alternateur ou une autre partie de la centrale électrique. Ces différents matériels, que sont le labyrinthe, le palier et le joint d'arbre, sont relativement onéreux et doivent chacun faire l'objet d'opérations de maintenance régulières, ce qui renchérit également le coût d'exploitation d'une turbine Francis de l'art antérieur.

Par ailleurs, FR-A-1 399 028 enseigne de réaliser un joint liquide entre un rotor et une partie fixe d'une machine hydraulique. Comme ce joint liquide est en partie délimité par une quantité de fluide de faible densité, tel que de l'air, il ne peut pas remplir efficacement une fonction de centrage du rotor.

Des problèmes analogues se posent avec des pompes, notamment les pompes centrifuges, ainsi qu'avec des turbines-pompes.

C'est à ces inconvénients qu'entend plus particulièrement remédier l'invention en proposant une nouvelle machine hydraulique dans laquelle les fuites, qui existent au niveau du labyrinthe des machines connues, sont sensiblement réduites, ce qui permet d'augmenter le rendement global d'une installation incorporant une telle machine.

A cet effet, l'invention concerne une machine hydraulique qui comprend une roue mobile en rotation, par rapport à une structure fixe et autour d'un axe de rotation fixe, cette machine étant destinée à être traversée par un écoulement forcé d'eau. Un palier hydrostatique remplissant une fonction de centrage de la roue sur son axe de rotation et ménagé entre, d'une part, un élément solidaire en rotation de la roue et, d'autre part, une partie de la structure fixe, est disposé entre une première zone de la machine, qui est en communication fluidique avec l'écoulement forcé et dans laquelle règne, en fonctionnement, une pression similaire à celle de l'écoulement forcé, et une deuxième zone de la machine, qui est isolée de l'écoulement forcé par ce palier. En outre, des moyens d'injection d'eau débouchent dans plusieurs cavités reparties de façon régulière, autour de l'axe de rotation de la roue et ménagée dans l'une des surfaces en regard de l'élément solidaire de la roue et de la partie de structure fixe, surfaces entre lesquelles est ménagé le palier hydrostatique.

Au sens de l'invention, la pression dans la première zone est similaire à celle de l'écoulement forcé en ce sens qu'elles sont du même ordre de grandeur. En particulier, la pression dans la première zone est pratiquement égale à la pression moyenne de l'écoulement forcé, aux pertes de charge près. La pression dans la première zone est supérieure à 60%, de préférence supérieure à 80%, de la pression au sein de cet écoulement forcé.

Grâce à l'invention, le palier hydrostatique peut remplir simultanément la fonction du labyrinthe, du palier et du joint d'arbre des machines de l'état de la technique. En particulier, le palier hydrostatique isole efficacement la première zone de la machine par rapport à la deuxième zone, avec des fuites qui sont bien inférieures à celles obtenues avec un labyrinthe de l'état de la technique. Ceci permet donc de récupérer une plus grosse fraction de la quantité d'eau amenée au voisinage de la roue d'une turbine pour entraîner effectivement cette roue en rotation. Dans le cas d'une pompe, une proportion plus importante de l'eau mise en mouvement par la roue peut être récupérée en sortie de la machine, par rapport aux machines de l'état de la technique.

Selon des aspects avantageux mais non obligatoires de l'invention, une telle machine peut incorporer une ou plusieurs des caractéristiques suivantes, prises dans toutes les combinaisons techniquement admissibles :
- Le palier hydrostatique est ménagé, le long de l'axe de rotation de la roue, au niveau ou au voisinage d'une zone de jonction entre la roue et un arbre supportant cette roue.
- Des moyens d'injection d'eau, qui sont alimentés à partir d'une conduite d'amenée d'eau à la machine, débouchent dans le palier, à travers la partie de structure fixe. Dans ce cas, il est avantageusement prévu des moyens d'augmentation de la pression de l'eau injectée par rapport à la pression de l'eau dans la conduite.
- Les moyens d'injection d'eau comprennent des séries de diaphragmes montés les uns derrière les autres et permettant, avec les moyens d'augmentation de pression, de contrôler la pression de l'eau injectée dans le palier.
- Selon un premier mode de réalisation de l'invention, l'élément solidaire en rotation de la roue est formé par, ou monté sur, l'extrémité d'un arbre qui supporte cette roue. Selon un deuxième mode de réalisation, l'élément solidaire en rotation de la roue est formé par, ou monté sur, un organe monobloc avec cette roue. Selon un troisième mode de réalisation de l'invention, l'élément solidaire de la roue est rapporté de façon amovible sur cette roue.
- Le jeu radial du palier est inférieur à 0,5 mm, de préférence compris entre 0,1 et 0,2 mm, pour un palier de diamètre compris entre 1,5 et 2 m. Ce faible jeu du palier permet de limiter très fortement les fuites d'eau à travers celui-ci.

L'invention concerne également une installation de conversion d'énergie hydraulique en énergie électrique, ou réciproquement, selon la revendication 10 qui comprend une machine telle que mentionnée ci-dessus. Une telle installation est plus simple à fabriquer et présente de meilleures performances techniques et économiques que celles de l'état de la technique, notamment du fait que son entretien est simplifié.

L'invention concerne enfin l'utilisation d'un palier hydrostatique selon la revendication 11 dans les conditions mentionnées ci-dessus, c'est-à-dire dans une machine telle que mentionnée ci-dessus, pour remplir une fonction d'isolation fluidique entre, d'une part, une première zone de la machine qui est en communication fluidique avec un écoulement forcé traversant une roue de la machine et dans laquelle règne, en fonctionnement, une pression similaire à celle de l'écoulement forcé et, d'autre part, une deuxième zone de la machine dans laquelle règne une pression inférieure à celle régnant dans la première zone, ainsi qu'une fonction de centrage de la roue par rapport à son axe de rotation.

L'invention sera mieux comprise et d'autres avantages de celle-ci apparaîtront plus clairement à la lumière de la description qui va suivre de trois mode de réalisation d'une machine et d'une installation conformes à son principe, donnée uniquement à titre d'exemple et faites en référence aux dessins annexés dans lesquels
- la figure 1 est une coupe de principe d'une installation de conversion d'énergie conforme à l'invention comprenant une turbine Francis conforme à l'invention ;
- la figure 2 est une vue à plus grande échelle du détail II à la figure 1 ;
- la figure 3 est une demi-coupe correspondant à la partie inférieure droite de la figure 1, pour une installation et une machine conformes à un deuxième mode de réalisation de l'invention et
- la figure 4 est une demi-coupe analogue à la figure 3 pour une installation et une machine conformes à un troisième mode de réalisation de l'invention.

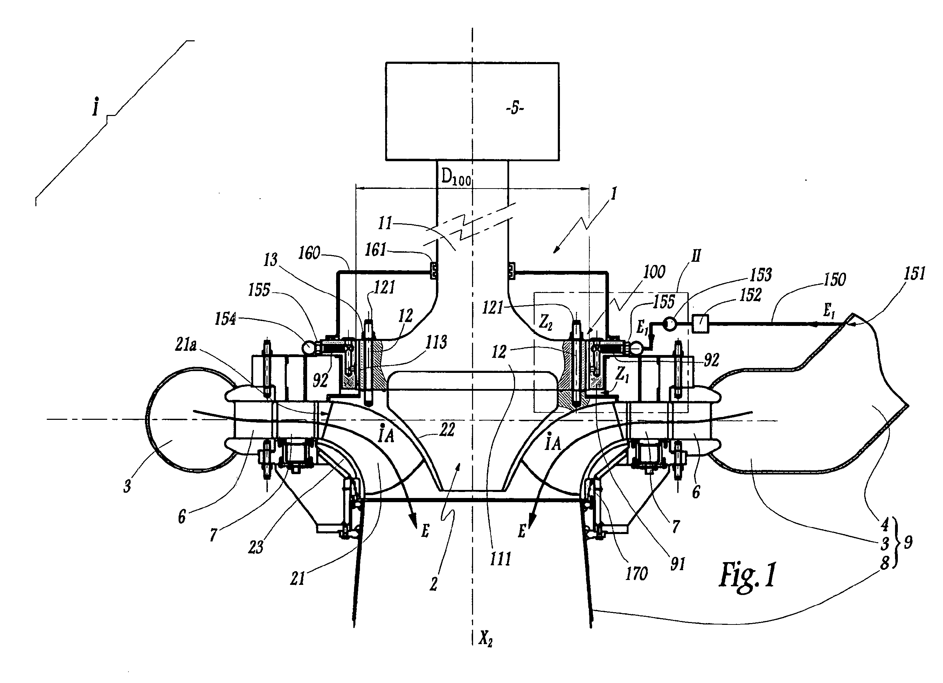

L'installation I représentée à la figure 1 comprend une turbine Francis 1 dont la roue 2 est alimentée à partir d'une bâche 3 dans laquelle débouche une conduite forcée 4. La turbine 1 est accouplée par un arbre 11 à un alternateur 5 de production d'électricité. Entre la bâche 3 et la roue 2 est disposée une série d'avant-directrices 6 et de directrices 7 dont la fonction est de guider un écoulement E provenant de la conduite 4 et de la bâche 3 et destiné à traverser la roue 2 en direction d'un conduit d'évacuation 8.

On note X₂ l'axe de rotation de la roue, lequel est fixe.

La roue 2 comprend des aubes 21 qui s'étendent entre un plafond 22 et une ceinture 23. Les aubes définissent, entre elles et avec le plafond 22 et la ceinture 23, des espaces inter-aubes IA dans lesquels transite l'écoulement E lorsqu'il traverse la roue 2.

La roue 2 est fixée sur l'extrémité inférieure 111 de l'arbre 11 au moyen de goujons 12 qui traversent des orifices 112 ménagés dans l'extrémité 111 et qui sont en prise dans des taraudages 221 ménagés dans le plafond 22. Un écrou 13 est monté autour de chaque goujon 12 lorsque celui-ci a été serré dans le taraudage 221 correspondant, grâce à sa tête polygonale 121.

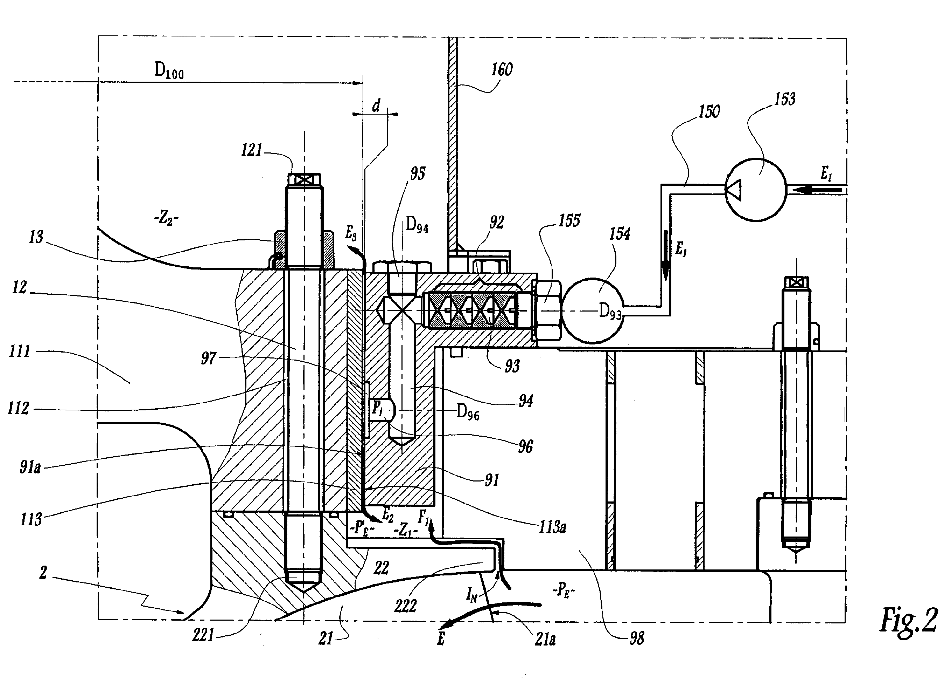

La bâche 3, la conduite 4 et le conduit 8 appartiennent à une structure fixe 9 qui n'est que partiellement représentée sur les figures 1 et 2 et qui supporte les parties tournantes de la turbine 1, notamment l'arbre 11 et la roue 2.

Un palier hydrostatique 100 est formé autour de l'extrémité 111 de l'arbre 11. Ce palier 100 est défini entre une bague ou frette 113 montée autour de l'extrémité 111 et un élément annulaire 91 disposé autour de cette bague, avec un jeu réduit. L'élément annulaire 91 appartient à la structure fixe 9. Il est donc fixe en rotation par rapport à l'axe X₂.

On note d la distance, radiale par rapport à l'axe X₂, entre la surface radiale externe 113a de la bague 113 et la surface radiale interne 91 a de l'élément 91. La distance d est le jeu radial du palier 100 qui est défini entre ces surfaces. Elle a une valeur inférieure à 0,5 mm pour un palier dont le diamètre D₁₀₀ est compris entre 1,5 et 2 mètres. La valeur de l'épaisseur d est avantageusement comprise entre 0,1 et 0,2 mm dans les conditions précitées. Cette valeur est exagérée sur la figure 2. La valeur du jeu radial d est déterminée afin d'assurer le fonctionnement hydrostatique du palier 100. Cette valeur est très inférieure au jeu habituel dans un labyrinthe, qui est de l'ordre de 1 à 3 mm.

Le palier 100 est alimenté en eau à partir de la conduite forcée 4. Un tuyau 150 relie un piquage 151 ménagé dans la conduite 4 et un filtre 152 destiné à débarrasser l'eau provenant de la conduite 4 de ses impuretés, notamment des grains de sable qu'elle peut transporter. On note E₁ l'écoulement d'eau dans le tuyau 150. Cet écoulement a un débit très inférieur à l'écoulement E qui transite à travers les éléments 6, 7 et 2, comme expliqué précédemment. En pratique, le débit de l'écoulement E₁ a une valeur inférieure au tiers du débit de l'écoulement dans un labyrinthe classique d'une turbine de l'art antérieur.

Le conduit 150 se prolonge en aval du filtre 152 jusqu'à une pompe 153 qui permet d'augmenter la pression de l'eau de l'écoulement E₁. Le conduit 150 est raccordé à une conduite 154 en forme de tore centré sur l'axe X₂. La conduite 154 permet d'alimenter le palier 100 à travers l'élément 91 en plusieurs points répartis autour de l'axe X₂. Dans l'exemple représenté, douze points d'alimentation du palier P sont prévus, régulièrement répartis autour de l'axe X₂, avec un écart angulaire entre deux points d'alimentation adjacents de 30°.

La pompe 153 est facultative, en ce sens que la pression de l'écoulement E₁ au niveau du piquage 151 peut être suffisant pour alimenter le palier 100.

Au niveau d'un point d'alimentation, la conduite 154 est reliée, par un piquage 155, à une série de diaphragmes 92 montés les uns derrière les autres dans un conduit 93 ménagé à l'intérieur de l'élément 91. Ce conduit 93 s'étend selon une direction D₁ essentiellement radiale par rapport à l'axe X₂ et débouche dans un second conduit 94 dont la direction principale D₉₄ est perpendiculaire à celle du conduit 93 et parallèle à l'axe X₂. Ce conduit 94 est obturé, en partie haute de l'élément 91, par une vis 95.

Un troisième conduit 96 s'étend parallèlement au conduit 93, c'est-à-dire selon une direction D₉₆ radiale par rapport à l'axe X₂, et relie le conduit 94 à une cavité 97 ménagée dans la surface 91 a. Ainsi, de l'eau provenant de la conduite 4 peut être injectée dans le palier 100 au niveau des douze cavités 97, à une pression contrôlée grâce à la pompe 153 et aux séries de diaphragmes 92.

Cette injection d'eau répartie autour de l'axe X₂ permet d'assurer la lubrification du palier hydrostatique 100 lors du mouvement de rotation de la roue 2 et de l'arbre 11 par rapport à la structure 9.

Ce mode d'injection de l'eau dans le palier hydrostatique permet d'équilibrer le mouvement de rotation de la roue 2 autour de l'axe X₂. En effet, si l'on considère les deux points d'injection d'eau représentés respectivement sur la gauche et sur la droite de la figure 1, on peut envisager le cas où la roue 2 à tendance à se décaler vers la gauche de la figure 1 par rapport à l'axe X₂, par exemple sous l'effet d'un déséquilibre transitoire. Dans ce cas, l'épaisseur d du palier 100 tend à augmenter du côté du point d'injection situé sur la droite de la figure 1 et le laminage de l'eau sortant de la cavité 97 située sur la droite de la figure 1 est moins important, de sorte que le débit d'eau sortant de cette cavité tend à augmenter. Il en résulte que la perte de charge dans la série de diaphragmes 92 augmente, de sorte que la pression de l'eau circulant dans les conduits 94 et 96, puis dans la cavité 97, diminue. En d'autres termes, un décalage de la roue 2 vers la gauche à la figure 1 tend à diminuer la pression d'injection de l'eau dans le palier 100, au niveau du point d'injection représenté sur la droite de cette figure.

A contrario, le même décalage a pour effet de diminuer l'épaisseur d du palier au niveau du point d'injection représenté du côté gauche de la figure 1. Ceci induit une diminution du débit dans la série de diaphragmes 92 de ce point d'injection. Cette diminution de débit induit une diminution de la perte de charge à travers cette série de diaphragmes 92 et, par voie de conséquence, une augmentation de la pression de l'eau injectée au niveau de ce point d'injection dans le palier 100.

Ainsi, un décalage de la roue 2 vers la gauche à la figure 1 a pour effet de diminuer la pression dans le palier 100, au niveau du point d'injection représenté sur la droite de cette figure, et d'augmenter la pression d'injection d'eau dans ce palier, au niveau du point d'injection représenté sur la gauche de cette figure. Ces variations de pression tendent à réaligner la roue 2 sur l'axe X₂. Le palier hydrostatique 100 remplit donc une fonction de centrage de la roue 2 sur son axe de rotation X₂.

On note P_{E} la pression de l'écoulement E en entrée de la roue 2, c'est-à-dire au voisinage du bord d'attaque 21a des aubes 21, immédiatement en aval des directrices 7. On note 98 un support appartenant à la structure fixe 9 et sur lequel est monté l'élément 91. Pour permettre la rotation de la roue 2 par rapport à la structure 9, un interstice I_{N} est ménagé entre le bord radial externe de 222 du plafond 22 et le support 98. Du fait de la présence de cet interstice, de l'eau s'écoule, à partir de la zone d'entrée de la roue 2, comme représenté par la flèche F₁, jusque dans une zone Z₁ qu'elle remplit à une pression P'_{E} qui est du même ordre de grandeur que la pression P_{E}. En pratique, la zone Z₁ est située immédiatement en dessous du palier 100 et la valeur de la pression P'_{E} correspond à plus de 60 %, de préférence plus de 80 %, de la valeur de la pression P_{E}.

On définit par ailleurs une deuxième zone Z₂ de la turbine 1 qui entoure l'arbre 11 au voisinage des têtes 121 des goujons 12. Cette zone n'est normalement pas soumise à la pression P_{E} de l'écoulement E. En pratique, il doit y avoir une quantité d'eau minimale dans la zone Z₂. La pression dans la zone Z₂ est inférieure à la pression dans la zone Z₁ et, de préférence, égale à la pression atmosphérique.

Le palier 100 remplit donc une fonction d'isolation entre la zone Z₁, dans laquelle l'eau est présente avec une pression P'_{E} relativement élevée, et la zone Z₂, dans laquelle une quantité résiduelle d'eau est présente sous faible pression. Le palier 100 peut donc être qualifié de « palier-labyrinthe ». Cette fonction d'isolation est obtenue grâce au fait que, en fonctionnement, le palier est alimenté en eau à travers le tuyau 150, la conduite 154 et les différents conduits 95, 96 et cavités 97. En effet, l'eau injectée sous pression dans les cavités 97 se répartit dans le palier 100 et évite que de l'eau provenant de la zone Z₁ ne s'écoule vers la zone Z₂. Ceci est à rapprocher du fait que la pression P_{I} d'injection de l'eau dans les cavités 97 est, grâce à la pompe 153 ou à la pression au niveau du piquage 151, supérieure à la pression P'_{E}.

Ainsi, le palier hydrostatique 100 évite qu'une portion de l'écoulement E qui passe à travers les avant-directrices 6 et les directrices 7 ne soit perdue du fait d'une fuite non négligeable au niveau de la zone Z₁, comme cela serait le cas si un labyrinthe était installé comme dans les machines hydrauliques de l'état de la technique. Au contraire, la présence du palier hydrostatique 100 entre les zones Z₁ et Z₂ permet d'éviter, ou de limiter très sensiblement, une telle fuite. En fait, la quantité d'eau injectée à travers les différentes cavités 97 se répartit dans le palier 100 et une partie de celle-ci s'écoule par gravité dans la zone Z₁. En d'autres termes, une portion E₂ de l'écoulement E₁ s'écoule vers la zone Z₁ et, à travers l'interstice I_{N}, peut rejoindre l'écoulement E pour participer à l'entraînement en rotation de la roue 2. Cette partie E₂ de l'écoulement est donc motrice pour la machine.

Une autre partie E₃ de l'écoulement E₁ s'écoule vers la zone Z₂, cette partie constituant la seule fuite réelle de la somme des écoulements E et E₁. Compte tenu du faible jeu radial d du palier 100, cette partie d'écoulement E₃ a un débit très faible vis-à-vis de celui de l'écoulement E, ce qui constitue un progrès par rapport aux machines de l'état de la technique.

Un capot 160 est disposé autour de la zone Z₂ et permet de retenir la faible quantité d'eau qui s'y accumule du fait de l'écoulement E₃. Un drain non représenté permet de diriger cette quantité d'eau vers un puits d'évacuation. A l'interface entre l'arbre 11 et le capot 160, un ensemble de chicanes 161 est prévu pour limiter les risques d'éclaboussures.

Les surfaces 113a et 91a sont traitées pour résister à l'usure et au grippage pour les cas extrêmes de coupure d'alimentation en eau. La présence d'un revêtement évite la détérioration du palier 100 dans ces cas extrêmes.

Dans le premier mode de réalisation, la bague ou frette 113 n'est pas obligatoire et un revêtement tel que mentionné ci-dessus pourrait être déposé directement sur la surface radiale externe de l'extrémité 111.

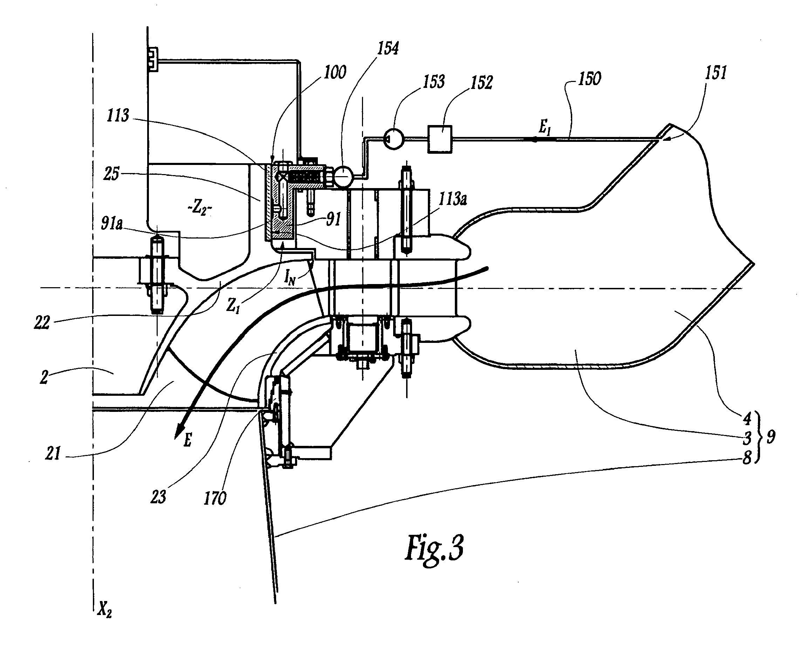

Dans le second mode de réalisation de l'invention représenté à la figure 3, les éléments analogues à ceux du premier mode de réalisation portent les mêmes références. Dans ce qui suit, on ne décrit que ce qui distingue le deuxième mode de réalisation du précédent.

Le palier hydrostatique 100 est ménagé entre un élément annulaire 91 appartenant à la structure fixe et une aile 25 monobloc avec le plafond 22 de la roue 2. Une frette 113 est montée autour de l'aile 25 et sa surface radiale externe 113a forme, avec la surface radiale interne 91 a de l'élément 91, le palier 100. Une zone Z₁ est définie immédiatement sous l'élément 91 et elle est en communication fluidique, à travers un interstice 1 avec l'écoulement E transitant dans la roue 2. Une zone Z₂ est définie radialement entre l'aile 25 et l'extrémité inférieure 111 de l'arbre 11. Le palier hydrostatique 100 permet d'isoler la zone Z₁, dans laquelle l'eau est à pression relativement élevée, de la zone Z₂, dans laquelle l'eau est à basse pression, la pression dans la zone Z₂ étant de préférence égale à la pression atmosphérique.

Comme dans le premier mode de réalisation, la frette 113 peut être omise. Dans ce cas, le palier 100 est défini entre la surface radiale externe de l'aile 25, éventuellement revêtue d'un revêtement ad hoc, et la surface 91a.

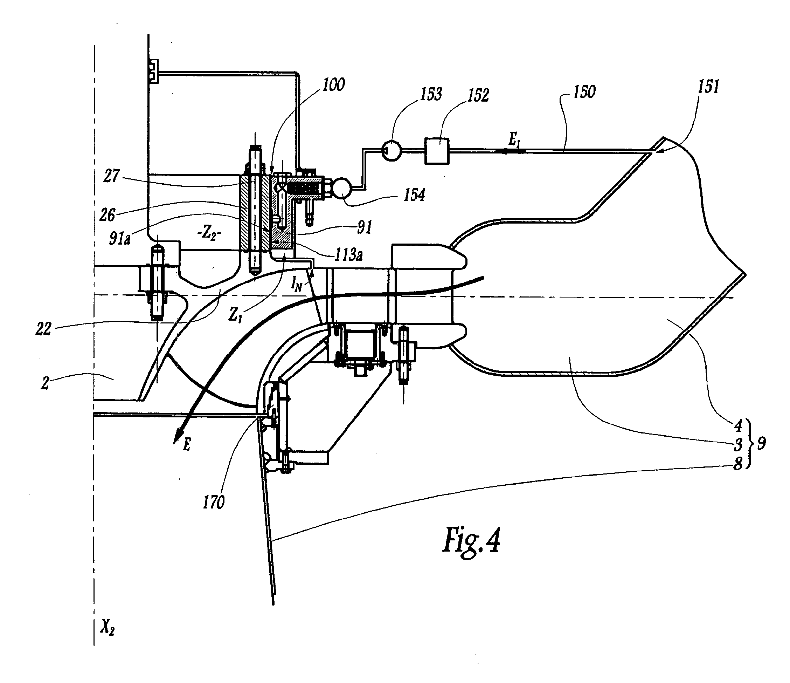

Dans le troisième mode de réalisation de l'invention représenté à la figure 4, les éléments analogues à ceux du premier mode de réalisation portent les mêmes références. Dans ce qui suit, on ne décrit que ce qui différencie ce mode de réalisation du premier.

Un anneau 26 est rapporté sur le plafond 22 de la roue 2 au moyen de vis 27 réparties sur le pourtour de ce plafond. Cet anneau 26 est réalisé dans un matériau comparable à celui des frettes 113 des premier et deuxième modes de réalisation. Il est éventuellement revêtu d'un revêtement adapté sur sa surface radiale externe 113a qui est tournée vers la surface radiale interne 91 a d'un élément 91 de la partie fixe avec lequel l'anneau 26 définit le palier hydrostatique 100. Comme précédemment, ce palier 100 permet d'isoler l'une par rapport à l'autre une zone Z₁ de haute pression, située sous l'élément 91 et en communication fluidique à travers un interstice I_{N} avec l'écoulement E transitant par la roue 2, et une zone Z₂ de basse pression, située entre l'anneau 26 et l'extrémité inférieure 111 de l'arbre 11 de la turbine 1.

Les paliers 100 des deuxième et troisième modes de réalisation assurent une fonction de centrage, comme le palier du premier mode de réalisation. Ils fonctionnent de la même manière et ne sont donc pas décrits plus en détails.

Quel que soit le mode de réalisation considéré, la réduction du jeu radial, c'est-à-dire de l'épaisseur d, du palier hydrostatique 100, par rapport au jeu des labyrinthes des machines de conception classiques permet de limiter fortement les pertes par fuites et d'augmenter le rendement de la turbine 1. En effet, ces pertes sont limitées à l'écoulement E₃ du premier mode de réalisation et aux écoulements correspondants des autres modes. Par ailleurs, le positionnement du palier hydrostatique 100, qui est relativement proche de l'axe X₂ avec un diamètre inférieur à 2 m, permet un bon centrage de la roue en fonctionnement et une réduction des mouvements d'arbres perpendiculairement à l'axe X₂. Cette réduction des mouvements parasites facilite la conception du labyrinthe 170 installé entre la ceinture 23 et la structure fixe 9 afin de limiter les fuites dans la zone aval de la roue. Ceci améliore également le rendement de la turbine 1.

De par sa conception et son positionnement dans la machine 1, le palier hydrostatique 100 remplit les fonctions respectives du labyrinthe, du palier et du joint d'arbre des machines de l'état de la technique, ce qui s'avèrera avantageux en termes de prix de revient et de coût de maintenance.

L'invention n'est pas limitée aux exemples décrits et peut être mise en oeuvre avec des turbines, des pompes, notamment des pompes centrifuges, ou des turbines-pompes autres qu'une turbine Francis.

## Revendications

1. Machine hydraulique (1) comprenant :
- une roue (2) mobile en rotation, par rapport à une structure fixe (9) et autour d'un axe de rotation fixe (X₂), la roue étant destinée à être traversée par un écoulement forcé (E) d'eau,
- un palier hydrostatique (100), remplissant une fonction de centrage de la roue (2) sur son axe de rotation (X₂), ménagé entre, d'une part, un élément (111, 113 ; 25, 113 ; 26) solidaire en rotation de la roue et, d'autre part, une partie (91) de la structure fixe, ce palier hydrostatique étant disposé entre une première zone (Z₁) de la machine, qui est en communication fluidique (F₁) avec l'écoulement forcé (E) et dans laquelle règne, en fonctionnement, une pression (P'_{E}) similaire à celle (P_{E}) de l'écoulement forcé, et une deuxième zone (Z₂) de la machine qui est isolée de l'écoulement forcé par ce palier,
cette machine hydraulique étant **caractérisée en ce que** des moyens (93-96, 150-155) d'injection d'eau débouchent dans plusieurs cavités (97) réparties régulièrement autour de l'axe de rotation (X₂) de la roue (2) et ménagées dans l'une des surfaces en regard (91 a, 113a) de l'élément (111, 113 ; 25, 113 ; 26) solidaire de la roue (2) et de la partie (91) de structure fixe (9) entre lesquelles est ménagé le palier hydrostatique (100).

2. Machine selon la revendication 1, **caractérisée en ce que** le palier hydrostatique (100) est ménagé, le long de l'axe de rotation (X₂) de la roue (2), au niveau ou au voisinage d'une zone de jonction entre la roue et un arbre (11) supportant la roue.

3. Machine selon l'une des revendications précédentes, **caractérisée en ce que** des moyens (92-96, 150-155) d'injection d'eau, alimentés à partir d'une conduite (4) d'amenée d'eau à la machine (1), débouchent dans le palier (100), à travers la partie de structure fixe (91).

4. Machine selon la revendication 3, **caractérisée en ce qu'**elle comprend des moyens (153) d'augmentation de la pression de l'eau injectée par rapport à la pression de l'eau dans la conduite (4).

5. Machine selon la revendication 4, **caractérisée en ce que** les moyens d'injection d'eau comprennent des séries de diaphragmes (92) montés les uns derrière les autres et permettant, avec les moyens (153) d'augmentation de pression, de contrôler la pression de l'eau injectée dans le palier (100).

6. Machine selon l'une des revendications précédentes, **caractérisée en ce que** l'élément (113) solidaire en rotation de la roue (2) est formé par; ou monté sur, l'extrémité (111) d'un arbre (11) supportant la roue.

7. Machine selon l'une des revendications 1 à 5, **caractérisée en ce que** l'élément (113) solidaire en rotation de la roue (2) est formé par, ou monté sur, un organe (25) monobloc avec la roue.

8. Machine selon l'une des revendications 1 à 5, **caractérisée en ce que** l'élément (26) solidaire de la roue (2) est rapporté de façon amovible sur la roue.

9. Machine selon l'une des revendications précédentes, **caractérisée en ce que** le jeu radial (d) du palier est inférieur à 0,5 mm, de préférence compris entre 0,1 et 0,2 mm, pour un palier de diamètre (D₁₀₀) compris entre 1,5 m et 2m.

10. Installation (I) de conversion d'énergie hydraulique en énergie électrique, ou réciproquement, **caractérisée en ce qu'**elle comprend une machine (1) selon l'une des revendications précédentes.

11. Utilisation d'un palier hydrostatique (100) dans une machine hydraulique (1) selon l'une des revendications 1 à 9, pour remplir des fonctions :
- d'isolation fluidique entre, d'une part, une première zone (Z₁) de la machine qui est en communication fluidique (F₁) avec un écoulement forcé (E) traversant une roue (2) de la machine et dans laquelle règne, en fonctionnement, une pression (P'_{E}) similaire à celle (P_{E}) de l'écoulement forcé et, d'autre part, une deuxième zone (Z₂) de la machine dans laquelle règne une pression inférieure à celle régnant dans la première zone ;
- de centrage de la roue (2) par rapport à son axe de rotation (X₂).

## Patentansprüche

1. Hydraulische Maschine (1), umfassend:
- ein Rad (2), das bezüglich einer feststehenden Struktur (9) und um eine feststehende Rotationsachse (X₂) drehbeweglich und dazu bestimmt ist, dass eine Wasserzwangsströmung (E) darüberfließt,
- ein eine Funktion des Zentrierens des Rads (2) auf seiner Rotationsachse (X₂) erfüllendes hydrostatisches Lager (100), das zwischen einerseits einem drehfest mit dem Rad verbundenen Element (111, 113; 25, 113; 26) und andererseits einem Teil (91) der feststehenden Struktur angeordnet ist, wobei dieses hydrostatische Lager zwischen einem ersten Bereich (Z₁) der Maschine, der mit der Zwangsströmung (E) in Strömungsverbindung (F₁) steht und in dem im Betrieb ein dem Druck (P_{E}) der Zwangsströmung ähnlicher Druck (P'_{E}) herrscht, und einem zweiten Bereich (Z₂) der Maschine, der durch dieses Lager von der Zwangsströmung isoliert ist, angeordnet ist,
**dadurch gekennzeichnet, dass** Wassereinspritzmittel (93 - 96, 150 - 155) in mehreren Hohlräumen (97) münden, die gleichmäßig um die Rotationsachse (X₂) des Rads (2) verteilt und in einer der sich gegenüberliegenden Flächen (91a, 113a) des fest mit dem Rad (2) verbundenen Elements (111, 113; 25, 113; 26) und des Teils (91) der feststehenden Struktur (9) ausgeführt sind, zwischen denen das hydrostatische Lager (100) angeordnet ist.

2. Maschine nach Anspruch 1, **dadurch gekennzeichnet, dass** das hydrostatische Lager (100) entlang der Rotationsachse (X₂) des Rads (2) in einem oder in der Nähe eines Übergangsbereichs zwischen dem Rad und einer das Rad stützenden Welle (11) angeordnet ist.

3. Maschine nach einem der vorhergehenden Ansprüche, **dadurch gekennzeichnet, dass** Wassereinspritzmittel (93 - 96, 150 - 155), die durch eine Leitung (4) zur Zuführung von Wasser zu der Maschine (1) gespeist werden, über den Teil (91) der feststehenden Struktur in das Lager (100) münden.

4. Maschine nach Anspruch 3, **dadurch gekennzeichnet, dass** sie Mittel (153) zur Erhöhung des Drucks des eingespritzten Wassers gegenüber dem Druck des Wassers in der Leitung (4) umfasst.

5. Maschine nach Anspruch 4, **dadurch gekennzeichnet, dass** die Wassereinspritzmittel Reihen von Membranen (92) umfassen, die hintereinander angeordnet sind und mit den Druckerhöhungsmitteln (153) die Steuerung des Drucks des in das Lager (100) eingespritzten Wassers gestatten.

6. Maschine nach einem der vorhergehenden Ansprüche, **dadurch gekennzeichnet, dass** das drehfest mit dem Rad (2) verbundene Element (113) durch das Ende (111) einer das Rad stützenden Welle (11) gebildet oder daran montiert ist.

7. Maschine nach einem der Ansprüche 1 bis 5, **dadurch gekennzeichnet, dass** das drehfest mit dem Rad (2) verbundene Element (113) durch ein Organ (25) gebildet oder daran montiert ist, das mit dem Rad einstückig ist.

8. Maschine nach einem der Ansprüche 1 bis 5, **dadurch gekennzeichnet, dass** das fest mit dem Rad (2) verbundene Element (26) entfernbar am Rad angebracht ist.

9. Maschine nach einem der vorhergehenden Ansprüche, **dadurch gekennzeichnet, dass** das Radialspiel (d) des Lagers für ein Lager mit einem Durchmesser (D₁₀₀) zwischen 1,5 m und 2 m kleiner als 0,5 mm ist und vorzugsweise zwischen 0,1 und 0,2 mm liegt.

10. Anlage (I) zur Umwandlung von hydraulischer Energie in elektrische Energie oder umgekehrt, **dadurch gekennzeichnet, dass** sie eine Maschine (1) nach einem der vorhergehenden Ansprüche umfasst.

11. Verwendung eines hydrostatischen Lagers (100) in einer hydraulischen Maschine (1) nach einem der Ansprüche 1 bis 9, um folgende Funktionen zu erfüllen:
- Strömungsisolierung zwischen einerseits einem ersten Bereich (Z₁) der Maschine, der mit einer Zwangsströmung (E) in Strömungsverbindung (F₁) steht, die über ein Rad (2) der Maschine fließt und in dem im Betrieb ein dem Druck (P_{E}) der Zwangsströmung ähnlicher Druck (P'_{E}) herrscht, und andererseits einem zweiten Bereich (Z₂) der Maschine, in dem ein Druck herrscht, der unter dem im ersten Bereich herrschenden liegt,
- Zentrierung des Rads (2) bezüglich seiner Rotationsachse (X₂).

## Claims

1. Hydraulic machine (1) comprising:
- a wheel (2) which can move in rotation with respect to a stationary structure (9) and about a stationary axis of rotation (X₂), the wheel being designed to have a forced flow (E) of water through it,
- a hydrostatic bearing (100), performing the function of centring the wheel (2) on its axis of rotation (X₂), which is created between on one hand an element (111, 113; 25, 113; 26) which is secured in rotation with the wheel and on the other hand a part (91) of the stationary structure, this hydrostatic bearing being arranged between a first region (Z₁) of the machine, which is in fluidic communication (F₁) with the forced flow (E) and in which prevails, during operation, a pressure (P'_{E}) similar to that (P_{E}) of the forced flow, and a second region (Z₂) of the machine which is isolated from the forced flow by this bearing, this hydraulic machine being **characterized in that** water injection means (93-96, 150-155) open into several cavities (97) which are regularly distributed about the axis of rotation (X₂) of the wheel (2) and are created in one of the mutually opposite surfaces (91a, 113a) of the element (111, 113; 25, 113; 26) which is secured to the wheel (2) and of the part (91) of the stationary structure (9) between which is created the hydrostatic bearing (100).

2. Machine according to Claim 1, **characterized in that** the hydrostatic bearing (100) is created, along the axis of rotation (X₂) of the wheel (2), at or close to a junction region between the wheel and a shaft (11) supporting the wheel.

3. Machine according to either of the preceding claims, **characterized in that** water injection means (93-96, 150-155), fed from a duct (4) for supplying water to the machine (1), open into the bearing (100) through the part (91) of the stationary structure.

4. Machine according to Claim 3, **characterized in that** it comprises means (153) for increasing the pressure of the injected water with respect to the pressure of the water in the duct (4).

5. Machine according to Claim 4, **characterized in that** the water injection means comprise series of diaphragms (92) mounted one behind the other and by means of which, with the pressure-increasing means (153), the pressure of the water injected into the bearing (100) can be controlled.

6. Machine according to one of the preceding claims, **characterized in that** the element (113) which is secured in rotation with the wheel (2) is formed by or mounted on the end (111) of a shaft (11) supporting the wheel.

7. Machine according to one of Claims 1 to 5, **characterized in that** the element (113) which is secured in rotation with the wheel (2) is formed by or mounted on a member (25) which is integral with the wheel.

8. Machine according to one of Claims 1 to 5, **characterized in that** the element (26) which is secured to the wheel (2) is removably attached to the wheel.

9. Machine according to one of the preceding claims, **characterized in that** the radial play (d) of the bearing is less than 0.5 mm, preferably between 0.1 and 0.2 mm, for a bearing of diameter (D₁₀₀) between 1.5 m and 2 m.

10. Installation (I) for converting hydraulic energy into electrical energy, or vice versa, **characterized in that** it comprises a machine (1) according to one of the preceding claims.

11. Use of a hydrostatic bearing (100) in a hydraulic machine (1) according to one of Claims 1 to 9, for performing the functions of:
- fluidic isolation between, on one hand, a first region (Z₁) of the machine, which is in fluidic communication (F₁) with a forced flow (E) through a wheel (2) of the machine and in which prevails, during operation, a pressure (P'_{E}) similar to that (P_{E}) of the forced flow, and, on the other hand, a second region (Z₂) of the machine in which prevails a pressure lower than that prevailing in the first region;
- centring the wheel (2) with respect to its axis of rotation (X₂).
